(19) Europäisches Patentamt / European Patent Office / Office européen des brevets

(11) **EP 2 504 661 B1**

(12) **FASCICULE DE BREVET EUROPEEN**

(45) Date de publication et mention de la délivrance du brevet:
**21.01.2015 Bulletin 2015/04**

(21) Numéro de dépôt: **10757422.0**

(22) Date de dépôt: **27.09.2010**

(51) Int Cl.:
***G01C 19/574*** (2012.01)

(86) Numéro de dépôt international:
**PCT/EP2010/064251**

(87) Numéro de publication internationale:
**WO 2011/064017 (03.06.2011 Gazette 2011/22)**

(54) **GYROMETRE A STRUCTURE VIBRANTE A AU MOINS UN DIAPASON**

GYROMETER MIT VIBRATIONSSTRUKTUR MIT MINDESTENS EINER STIMMGABEL

GYROMETER HAVING A VIBRATING STRUCTURE INCLUDING AT LEAST ONE TUNING FORK

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **24.11.2009 FR 0905636**

(43) Date de publication de la demande:
**03.10.2012 Bulletin 2012/40**

(73) Titulaire: **Thales**
**92200 Neuilly Sur Seine (FR)**

(72) Inventeur: **CHAUMET, Bernard**
**F-86100 Chatellerault (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**WO-A1-2004/042324    WO-A1-2007/068649**
**US-A1- 2004 123 660**

## Description

L'invention porte sur un gyromètre à structure vibrante à au moins un diapason, réalisé par micro-usinage dans une plaque mince.

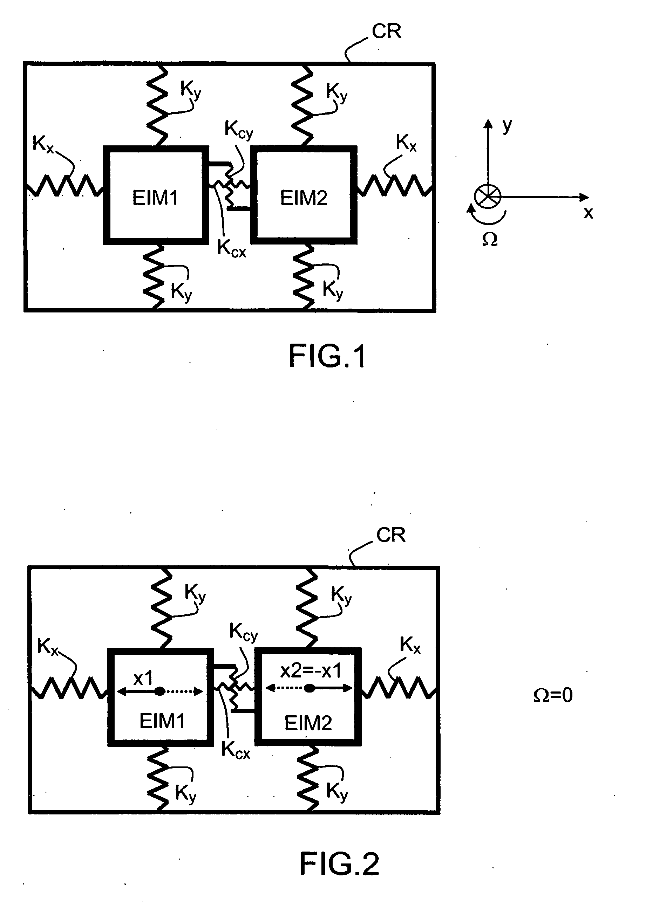

Il est connu des gyromètres à diapason comme illustré sur la figure 1. Deux ensembles inertiels mobiles EIM1 et EIM2 forment un diapason, sont suspendus sur un cadre rigide CR, et possèdent deux degrés de liberté selon les axes x et y respectivement nommés axe d'excitation et axe de détection. Les ensembles inertiels mobiles EIM1, EIM2 sont reliés au cadre rigide CR par des éléments de raideur Kx1 et Kx2 dans la direction d'excitation x et par des éléments de raideurs Ky1 et Ky2 dans la direction de détection y. Chaque ensemble inertiel mobile EIM1, EIM2 comprend une ou plusieurs masses.

Les deux ensembles inertiels mobiles EIM1 et EIM2 sont mécaniquement couplés entre eux par un ensemble de couplage de raideur $k_{cx}$ selon la direction x d'excitation et de raideur $k_{cy}$ selon la direction y de détection. Un tel gyromètre est, par exemple, décrit dans le document WO2004/042324 (Thalès).

Un tel gyromètre présente 2 modes de vibration utiles :

- un mode de fréquence fx dans lequel les deux ensembles inertiels mobiles EIM1 et EIM2 vibrent en opposition de phase selon l'axe x d'excitation, ce mode est nommé mode d'excitation ; et
- un mode de fréquence fy dans lequel les deux ensembles inertiels mobiles EIM1 et EIM2 vibrent en opposition de phase selon l'axe y de détection, ce mode est nommé mode de détection.

Comme illustré sur la figure 2, les deux ensembles inertiels mobiles EIM1 et EIM2 sont excités sur le mode de résonance d'excitation, mode selon lequel ils vibrent en opposition de phase selon la direction de l'axe x. Une boucle d'asservissement, non représentée sur la figure, permet de maintenir la fréquence d'excitation à la fréquence de résonance $f_x$ du mode d'excitation ainsi que de maintenir l'amplitude de ce mouvement constante.

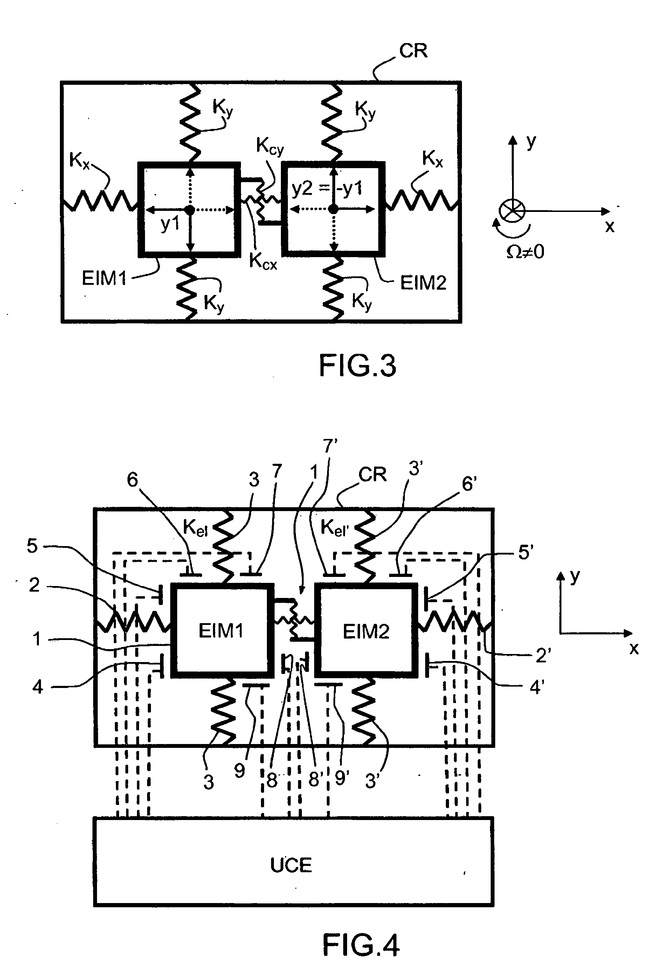

En présence d'une vitesse de rotation $\Omega$, dirigée selon un troisième axe z tel que le repère (y, x, z) est direct, les forces de Coriolis provoquent un couplage entre le résonateur d'excitation et le résonateur de détection engendrant un mouvement vibratoire de chacun des deux ensembles inertiels mobiles EIM1 et EIM2 selon l'axe y de détection, comme illustré sur la figure 3. Chaque ensemble inertiel mobile EIM1, EIM2 comprend plusieurs masses, par exemple deux, l'une intervenant dans le résonateur d'excitation, mais les deux intervenant dans le résonateur de détection. En d'autres termes, de manière simplifiée, le résonateur de détection comprend les deux ensembles inertiels mobiles EIM1, EIM2 et les éléments de raideurs selon l'axe y de détection, et le résonateur d'excitation comprend les deux ensembles inertiels mobiles EIM1, EIM2 et les éléments de raideurs selon l'axe x d'excitation.

Les mouvements des deux ensembles inertiels mobiles EIM1 et EIM2 selon l'axe y de détection sont en opposition de phase et le mouvement utile peut être défini par la demi-différence des mouvements de détection $y_1$ et $y_2$ de chaque ensemble inertiel mobile. Ce mouvement est dorénavant nommé mouvement différentiel de détection $y_{diff}$.

On peut le définir par $y_{diff} = \dfrac{y_1 - y_2}{2}$. Ce mouvement est également de fréquence de résonance $f_x$ selon l'axe x d'excitation. L'amplitude de ce mouvement différentiel de détection est proportionnelle à la vitesse de rotation.

Pour des gyromètres à diapason fonctionnant en boucle ouverte, on mesure directement l'amplitude du mouvement de détection $y_{diff}$ pour obtenir une information de vitesse de rotation.

Pour des gyromètres fonctionnant en boucle fermée, le mouvement de détection différentiel $y_{diff}$ est asservi à zéro par balance de force électrostatique selon l'axe y de détection. L'information de sortie du gyromètre est alors donnée par la tension de contre-réaction différentielle nécessaire à l'annulation du déplacement. Le schéma classique d'un tel asservissement est, par exemple illustré et décrit dans le brevet européen EP 1 579 176 B1 (Thalès).

Il est bien connu de l'homme de l'art que les imperfections de réalisation d'un gyromètre conduisent à des erreurs sur les informations délivrées en sortie du gyromètre. La plupart de ces imperfections doivent être compensées par un équilibrage du gyromètre par un équilibrage du gyromètre.

Il est connu de réaliser cette compensation en enlevant localement de la matière, par exemple par ablation au laser, de manière à modifier la répartition de masse ou de raideur. Cette méthode est généralement coûteuse à mettre en oeuvre sur un gyromètre micro-usiné dans une plaque mince de silicium, dont les mouvements de détection et d'excitation sont situés dans le plan du substrat.

Sur les gyromètres micro-usinés en silicium, la compensation peut être réalisée de manière électrique, à partir de forces électrostatiques contrôlables par des tensions électriques commandées. De tels gyromètres disposent généralement de moyens électrostatiques, notamment des électrodes commandées, capables de compenser deux types de défauts :

- le couplage mécanique entre le mode d'excitation et le mode de détection, à 'origine du biais dit en quadrature, et
- l'écart de fréquences entre mode d'excitation et le mode de détection.

Un exemple de réalisation de compensation du biais en quadrature d'un gyromètre vibrant micro-usiné planaire dont les mouvements d'excitation et de détection sont linéaires et situés dans le plan du substrat, est décrit dans la demande de brevet WO 2007/068649 (Thalès).

Toutefois, de telles compensations ne permettent pas de compenser les effets des dissymétries de masse et de raideur entre les deux branches du diapason.

Or, un gyromètre à diapason dont les deux branches sont dissymétriques est sensible aux accélérations linéaires.

En effet si les branches du diapason sont parfaitement symétriques, les mouvements de chaque ensemble inertiel mobile d'une branche du diapason provoqué par les accélérations linéaires restent parfaitement symétriques. Du fait de l'architecture différentielle du gyromètre à diapason, ce mouvement n'a pas d'effet détectable et ne peut donc pas perturber la sortie du gyromètre.

En revanche, en présence de dissymétries de masse ou de raideur entre les deux ensembles inertiels mobiles des branches du diapason, les accélérations linéaires selon l'axe y de détection provoquent alors des mouvements non symétriques selon l'axe y de détection des deux ensembles inertiels mobiles. L'effet de ces mouvements dissymétriques est alors détectable et amène une perturbation du signal de sortie du gyromètre.

Cette perturbation peut se traduire par une sensibilité de la sortie du gyromètre aux accélérations statiques ou aux accélérations dynamiques selon l'axe y de détection.

L'information S délivrée en sortie du gyromètre, exprimée en degrés/heure (deg/h ou °/h) peut être mise sous la forme de la relation suivante :

$$S = S_O + c_y \gamma_y$$

dans laquelle :

$S_O$ représente le signal de sortie du gyromètre en l'absence d'accélération, en deg.h$^{-1}$,

$\gamma_y$ représente une accélération linéaire statique ou dynamique selon l'axe y de détection, en G, G étant égal à 9.81 m.s$^{-2}$,

$c_y$ représente la sensibilité de la sortie S à l'accélération $\gamma_y$, en deg.h$^{-1}$·G$^{-1}$, et

$$c_y = a\delta k_y + b\delta m_y \ ,$$

a étant un coefficient de sensibilité, en deg.h$^{-1}$.G$^{-1}$.N.m$^{-1}$ pouvant éventuellement varier en fonction de la fréquence de l'accélération,

b étant un coefficient de sensibilité, en deg.h$^{-1}$.G$^{-1}$.kg$^{-1}$ pouvant éventuellement varier en fonction de la fréquence de l'accélération, $\delta m = m1 - m2$ représentant l'écart de masses entre les deux branches du diapason, en kg et

$\delta k = k1 - k2$ représentant l'écart de raideurs entre les deux branches du diapason, en N.m$^{-1}$.

La réduction de la sensibilité aux vibrations ou aux accélérations linéaires selon l'axe y de détection, peut être obtenue par équilibrage des deux branches du diapason.

Sur certains gyromètres à diapason métallique ou en quartz, cet équilibrage est réalisé par une ablation locale de matière consistant à créer une dissymétrie de masse ou de raideur opposée aux dissymétries initiales du diapason. Cette méthode est généralement coûteuse et difficile à mettre en oeuvre sur des gyromètres micro-usinés en silicium de petite taille.

Il est également possible d'utiliser des forces électrostatiques commandées permettant de créer une dissymétrie de raideur électrostatique contrôlée par un signal électrique qui s'oppose aux dissymétries initiales. De telles méthodes sont appliquées sur les gyromètres à coques vibrantes ou à anneau vibrant.

Un but de l'invention est de compenser des dissymétries de masses ou de raideur du résonateur de détection ou diapason d'un gyromètre à diapason silicium, à coût réduit, et avec une précision améliorée.

Selon un aspect de l'invention, il est proposé un gyromètre à structure vibrante à au moins un diapason, réalisé par micro-usinage dans une plaque mince, ledit diapason comprenant une paire d'ensembles inertiels mobiles reliés par un ensemble de couplage, un ensemble inertiel mobile étant muni de premiers éléments de raideur essentiellement déformables dans le plan de la plaque selon un axe x d'excitation et de deuxièmes éléments de raideur essentiellement déformables dans le plan de la plaque selon un axe y de détection sensiblement perpendiculaire à l'axe x. Le gyromètre comprend, en outre, pour le diapason, deux premières électrodes commandées d'excitation électrostatique selon l'axe x d'excitation respectivement associées aux deux ensembles inertiels mobiles, deux deuxièmes électrodes commandées de détection capacitive du mouvement d'excitation selon l'axe x d'excitation respectivement associées aux deux ensembles inertiels mobiles, et deux troisièmes électrodes commandées de détection capacitive du mouvement d'excitation selon l'axe y de détection respectivement associées aux deux ensembles inertiels mobiles. Lorsque le mouvement de détection est asservi par balance de force électrostatique, le gyromètre comprend deux électrodes commandées permettant d'appliquer la force électrostatique de contre-réaction nécessaire à l'asservissement du mouvement de détection.

Le gyromètre comprend également :

deux quatrièmes électrodes commandées d'équilibrage du résonateur de détection et d'ajustement électrostatique de la fréquence du résonateur de détection selon l'axe y de détection respectivement associées aux deux ensembles inertiels mobiles dudit diapason, et

des moyens de commande adaptés pour appliquer deux tensions électriques $V_1$ et $V_2$ continues respectives auxdites deux quatrièmes électrodes vérifiant vérifiant simultanément les relations :

$$V_1^2 + V_1^2 = \frac{2\left(f_{y\_initiale} - f_{y\_finale}\right)}{\mu_f} \quad \text{et} \quad V_1^2 - V_2^2 = \frac{c_{y\_initiale}}{a\lambda_f}$$

dans lesquelles :

$f_{y\_initiale}$ représente la fréquence de résonance initiale, lorsque les tensions électriques $V_1$ et $V_2$ sont nulles, du mode de détection selon l'axe y de détection, en Hz,

$f_{y\_finale}$ représente la fréquence de résonance finale du mode de détection selon l'axe y de détection à ajuster, en Hz, et

$\mu_f$ représente un coefficient de sensibilité de la fréquence du mode détection au carré de la tension électrique appliquée sur lesdites quatrièmes électrodes (9, 9'), en Hz.$V^{-2}$,

$c_{y\_initiale}$ représente la sensibilité initiale du gyromètre, lorsque les deux tensions électriques $V_1$ et $V_2$ sont nulles, aux accélérations linéaires selon l'axe y de détection en deg.h$^{-1}$.G$^{-1}$,

a représente un coefficient caractérisant l'influence d'un écart de raideur entre les deux branches du diapason sur la sensibilité du gyromètre aux accélérations linéaires selon l'axe y, en deg.h$^{-1}$.G$^{-1}$.N$^{-1}$.m, pouvant éventuellement varier en fonction de la fréquence de l'accélération,

$\lambda_f$ représente un coefficient de raideur électrostatique dépendant desdites quatrièmes électrodes (9, 9') en N.m$^{-1}$.V$^{-2}$,

$V_1$ et $V_2$ sont exprimées en Volts, et

G vaut 9,81 m.s$^{-2}$.

Un tel gyromètre est ainsi, à coût réduit, compensé, de manière à limiter fortement, voire annuler les dissymétries de masses ou de raideur du diapason ou des diapasons.

En outre, la précision est ainsi encore améliorée, car l'ajustement de l'écart de fréquences entre le mode de détection et d'excitation permet de mieux maîtriser le couplage gyrométrique entre le mode de détection et le mode d'excitation et de s'affranchir ainsi des dispersions occasionnées par certains défauts de fabrication sur ce couplage.

Le mouvement de détection du résonateur de détection peut être annulé par asservissement par balance de forces électrostatique, ladite fréquence de résonance finale $f_{y\_finale}$ est alors égale à la fréquence $f_x$ du mode d'excitation selon l'axe x d'excitation, et l'égalisation des deux fréquences peut être atteinte soit en utilisant une boucle de rétroaction pour commander lesdites quatrièmes électrodes, soit par une commande en boucle ouverte desdites quatrièmes électrodes.

Dans un autre mode de réalisation, dans lequel le mouvement de détection du résonateur de détection est en boucle ouverte, ladite fréquence de résonance finale $_{fy\_finale}$ est égale à somme de la fréquence fx du mode du mode d'excitation selon l'axe x d'excitation et d'un écart de fréquence $\Delta f_y$ prédéterminé.

L'invention sera mieux comprise à l'étude de quelques modes de réalisation décrits à titre d'exemples nullement limitatifs et illustrés par les dessins annexés sur lesquels :

- les figures 1, 2 et 3 illustrent schématiquement un gyromètre à diapason et son fonctionnement, de l'état de la technique ; et

- la figure 4 illustre un mode de réalisation d'un gyromètre à structure vibrante à au moins un diapason, réalisé par micro-usinage dans une plaque mince, selon un aspect de l'invention.

Sur les différentes figures, les éléments ayant des références identiques sont similaires.

Sur la figure 4 est représenté schématiquement un gyromètre à structure vibrante à un diapason, réalisé par micro-usinage dans une plaque mince.

Bien entendu, l'invention s'applique également à un gyromètre à structure vibrante, réalisé par micro-usinage dans une plaque mince, comprenant un nombre quelconque de diapasons.

Deux ensembles inertiels mobiles EIM1 et EIM2 reliés par un ensemble de couplage 1 forment un diapason, et sont suspendus sur un cadre rigide CR. Les deux ensembles inertiels mobiles EIM1 et EIM2 possèdent deux degrés de liberté selon les axes x et y respectivement nommés axe d'excitation et axe de détection. Les axes x d'excitation et y de détection sont sensiblement orthogonaux.

Un ensemble inertiel mobile est, par exemple, tel que décrit dans la demande de brevet WO2004/042324 (Thalès).

Chaque ensemble inertiel mobile EIM1, EIM2 est respectivement muni de premiers éléments de raideur 2, 2' essentiellement déformables dans le plan de la plaque selon l'axe x d'excitation. En outre, chaque ensemble inertiel mobile EIM1, EIM2 est respectivement muni de deuxièmes éléments de raideur 3, 3' essentiellement déformables dans le plan de la plaque selon l'axe y de-détection.

De manière classique, le gyromètre comprend une unité de commande électronique UCE, et deux premières électrodes commandées 4, 4' d'excitation électrostatique selon l'axe x d'excitation respectivement associées aux deux ensembles inertiels mobiles EIM1, EIM2.

Deux deuxièmes électrodes commandées 5, 5' de détection capacitive du mouvement d'excitation selon l'axe x d'excitation sont respectivement associées aux deux ensembles inertiels mobiles EIM1, EIM2.

De plus, deux troisièmes électrodes commandées 6, 6' de détection capacitive du mouvement d'excitation selon l'axe y de détection sont respectivement associées aux deux ensembles inertiels mobiles EIM1, EIM2.

Lorsque le mouvement de détection est asservi par balance de force électrostatique le gyromètre comprend deux électrodes 7 et 7' associées aux deux ensembles mobiles EIM1 et EIM2 et permettant d'appliquer la force électrostatique de contre-réaction nécessaire à l'asservissement du mouvement de détection.

Deux électrodes additionnelles optionnelles commandées 8, 8' peuvent servir à compenser le biais en quadrature.

Le gyromètre comprend également deux quatrièmes électrodes commandées 9, 9' d'équilibrage du résonateur de détection et d'ajustement électrostatique de la fréquence du résonateur de détection selon l'axe y de détection respectivement associées aux deux ensembles inertiels mobiles (EIM1, EIM2) dudit diapason.

Une unité de commande électronique UCE gère le fonctionnement du gyromètre.

L'unité de commande électronique UCE est adaptée pour appliquer deux tensions électriques $V_1$ et $V_2$ continues respectives auxdites deux quatrièmes électrodes 9, 9' vérifiant la relation $V_1^2 + V_2^2 = \dfrac{2\left(f_{y\_initiale} - f_{y\_finale}\right)}{\mu_f}$,

dans laquelle :

$f_{y\_initiale}$ représente la fréquence de résonance initiale, lorsque les tensions électriques $V_1$ et $V_2$ sont nulles, du mode de détection selon l'axe y de détection, en Hz,

$f_{y\_finale}$ représente la fréquence de résonance finale du mode de détection selon l'axe y de détection à ajuster, en Hz, et

$\mu_f$ représente un coefficient de sensibilité de la fréquence du mode détection au carré de la tension électrique appliquée sur lesdites quatrièmes électrodes, en Hz.V$^{-2}$.

En effet, en appliquant des tensions électriques $V_1$ et $V_2$ sur chacune des deux quatrièmes électrodes d'équilibrage 9 et 9', des raideurs électrostatiques négatives $k_{el1}$ et $k_{el2}$, en N.m$^{-1}$, selon l'axe y de détection, sont crées sur chacune des deux branches EIM1 et EIM2 du diapason :

$$k_{el1} = -\lambda V_1^2,$$

et

$$k_{el2} = -\lambda V_2^2$$

$\lambda$ représentant un coefficient qui caractérise la proportionnalité entre la raideur électrostatique et le carré de la tension électrique appliquée sur les quatrièmes électrodes 9, 9', en $N.m^{-1}.V^{-2}$.

Ces variations de raideurs ont pour effet de créer un écart de raideurs $\Delta k$ entre les deux branches EIM1 et EIM2 du diapason, proportionnellement à la différence des carrés des tensions $V_1$ et $V_2$ appliquées. $\Delta k$ vérifiant la relation suivante :

$$\Delta k = -\lambda \left( V_1^2 - V_2^2 \right)$$

Ces variations de raideur ont aussi pour effet de diminuer la fréquence de résonance du mode de détection selon l'axe y de détection proportionnellement à la somme des carrés des tensions appliquées, selon la relation suivante :

$$f_{y\_finale} = f_{y\_initiale} - \frac{\mu_f}{2} \left( V_1^2 + V_2^2 \right),$$

Aussi, pour atteindre la valeur finale ou souhaitée $f_{y\_finale}$ de la fréquence de résonance du mode de détection selon l'axe y de détection, les tensions électriques $V_1$ et $V_2$ à appliquer aux quatrièmes électrodes 9, 9' doivent respecter la relation suivante :

$$V_1^2 + V_2^2 = \frac{2 \left( f_{y\_initiale} - f_{y\_finale} \right)}{\mu_f}$$

Pour que le trim ou ajustement de fréquence soit possible, le terme $(f_{y\_initiale} - f_{y\_finale})$ doit toujours être positif. Cela est obtenu par un dimensionnement du gyromètre qui garantit que l'écart de fréquence $(f_{y\_initiale} - f_{y\_finale})$ reste toujours positif, ceci malgré les dispersions de réalisation.

L'écart de raideur $\Delta k$ entre les deux branches EIM1 et EIM2 du diapason, a pour effet de créer une sensibilité $S_y$ du gyromètre aux accélérations linéaires selon l'axe y de détection, vérifiant la relation $s_\gamma = a\lambda \left( V_1^2 - V_2^2 \right) \gamma_y$ , et pouvant se soustraire à la sortie initiale S valant $C_{y\_initiale}.\gamma_y$.

Ainsi on obtient une sortie S vérifiant la relation suivante:

$$S = c_{y\_initiale}.\gamma_y - a\lambda \left( V_1^2 - V_2^2 \right) \gamma_y$$

La sortie S peut ainsi être annulée en ajustant les tensions $V_1$ et $V_2$ de telle sorte que la condition suivante soit remplie :

$$V_1^2 - V_2^2 = \frac{c_{y\_initiale}}{a\lambda} \qquad \text{(équation 1)}$$

Le terme $c_{y\_initiale}$ qui représente la sensibilité initiale du gyromètre à l'accélération peut être mesuré par exemple lors de la calibration du gyromètre.

La différence des carrés des tensions électriques $V_1$ et $V_2$ permet à l'unité de commande électronique UCE de contrôler la sensibilité du gyromètre aux vibrations et la somme des carrés des tensions électriques $V_1$ et $V_2$ permet à cette unité de commande électronique UCE de contrôler la fréquence du mode de détection.

Par exemple, on peut considérer que les tensions électriques maximales applicables sur les quatrièmes électrodes 9, 9' sont de 20 V, et que les coefficients a, $\lambda_f$, et $\mu_f$ réalisent les conditions suivantes :

$$a\lambda_f \approx 0.5 \quad °/h/g/V^2 ,$$

et

$$\mu_F \approx 0.79 \quad Hz/V^2$$

Les tensions électriques $V_1$ et $V_2$, nécessaires pour des valeurs déterminées de $c_{y\_initiale}$ et de $f_{y\_initiale} - f_{y\_finale}$, vérifient alors les relations suivantes :

$$V_1^2 = \frac{1}{2}\left(\frac{f_{y\_initiale} - f_{y\_finale}}{0.79} + \frac{c_{\gamma\_initiale}}{0.5}\right)$$

$$V_2^2 = \frac{1}{2}\left(\frac{f_{y\_initiale} - f_{y\_finale}}{0.79} - \frac{c_{\gamma\_initiale}}{0.5}\right)$$

Les tensions électriques $V_1$ et $V_2$ sont comprises entre 0 V et 20 V. $f_{y\_initiale} - f_{y\_finale}$ est toujours positif.

En revanche, $c_{y\_initiale}$ peut être positif ou négatif.

En supposant $c_{y\_initiale}$ positif, les deux conditions suivantes doivent alors être respectées :

$$\frac{1}{2}\left(\frac{f_{y\_initiale} - f_{y\_finale}}{0.79} + \frac{c_{\gamma\_initiale}}{0.5}\right) \leq 20^2$$

$$\frac{1}{2}\left(\frac{f_{y\_initiale} - f_{y\_finale}}{0.79} - \frac{c_{\gamma\_initiale}}{0.5}\right) \geq 0$$

ou encore :

$$0.79\frac{c_{\gamma\_initiale}}{0.5} \leq f_{y\_initiale} - f_{y\_finale} \leq 0.79 \cdot \left(2 \cdot 20^2 - \frac{c_{\gamma\_initiale}}{0.5}\right)$$

En supposant $c_{y\_initiale}$ négatif, on obtient les mêmes conditions.

Le gyromètre est dimensionné de telle sorte que l'écart $f_{y\_initiale} - f_{y\_finale}$ respecte cette double inégalité.

L'information S délivrée en sortie du gyromètre, exprimée en degrés/heure (deg/h ou °/h), peut être mise sous la forme de la relation suivante :

$$S = S_o + c_y \gamma_y$$

L'invention est basée sur le fait que le terme de sensibilité $c_y$ évolue linéairement en fonction de la différence des carrés des tensions $V_1$ et $V_2$ appliquées sur chacune des quatrièmes électrodes. On peut donc annuler ce terme en appliquant une valeur adéquate de $V_1^2 - V_2^2$ sur ces électrodes.

Cette dépendance de $c_y$ à $V_1^2 - V_2^2$ peut être démontrée de manière théorique à partir des deux éléments suivants :

- le coefficient $c_y$ dépend linéairement des dissymétries de raideur et de masse $\delta n = m1 - m2$ et $\delta k = k1 - k2$ du diapason. On peut donc mettre le coefficient $c_y$ sous la forme suivante $c_y = a\delta k + b\delta m$

Par ailleurs, on est capable de créer artificiellement une dissymétrie de raideur électrostatique $\delta k_{ycl}$ en appliquant deux tensions continues $V_1$ et $V_2$ sur les deux quatrièmes électrodes. Cette raideur est proportionnelle à la différence des carrés des tensions appliquées et peut donc s'écrire sous la forme : $\delta k_{yel} = \lambda(V_2^2 - V_1^2)$

Ainsi en appliquant une tension $V_1$ et $V_2$, on modifie le terme de sensibilité $c_y$ de la manière suivante : $c_y = a(\delta k + \delta k_{yel}) + b\delta k$

Ou encore :

$$c_y = a\left(\delta k + \lambda\left(V_2^2 - V_1^2\right)\right) + b\delta m$$

Tous ces éléments mentionnés précédemment permettent d'étayer le fait que le terme de sensibilité à l'accélération $c_y$ évolue linéairement en fonction du carré des tensions $V_1$ et $V_2$ appliquées sur chacune des quatrièmes électrodes.

Mais pour déterminer quelle est la valeur de $V_1^2 - V_2^2$ qui annule le terme de sensibilité $c_y$, il n'est nullement nécessaire de déterminer séparément les coefficients a, b, $\lambda$.

On procède de la manière suivante :

Pour une valeur de $V_1^2 - V_2^2$ égale à zéro, on détermine expérimentalement la valeur du coefficient de sensibilité $c_y$. Pour ce faire, on soumet le capteur à plusieurs niveaux d'accélération, et on mesure pour chaque niveau la sortie S du capteur. La pente d'évolution de S en fonction du niveau d'accélération donne la valeur du coefficient $c_y$.

on réitère la mesure de $c_y$ pour des valeurs non nulles de $V_1^2 - V_2^2$ (par exemple pour deux autres valeurs)

on dispose ainsi d'une courbe d'évolution de $c_y$ en fonction de $V_1^2 - V_2^2$. On peut alors déterminer précisément par interpolation ou par extrapolation quelle est la valeur de $V_1^2 - V_2^2$ qui annule la sensibilité à l'accélération.

## Revendications

1. Gyromètre à structure vibrante à au moins un diapason, réalisé par micro-usinage dans une plaque mince, ledit diapason comprenant une paire d'ensembles inertiels mobiles (EIM1, EIM2) reliés par un ensemble de couplage (1), un ensemble inertiel mobile (EIM1, EIM2) étant muni de premiers éléments de raideur (2, 2') essentiellement déformables dans le plan de la plaque selon un axe x d'excitation et de deuxièmes éléments de raideur (3, 3') essentiellement déformables dans le plan de la plaque selon un axe y de détection sensiblement perpendiculaire à l'axe x, le gyromètre comprenant, en outre, pour le diapason, deux premières électrodes commandées (4, 4') d'excitation électrostatique selon l'axe x d'excitation respectivement associées aux deux ensembles inertiels mobiles (EIM1, EIM2), deux deuxièmes électrodes commandées (5, 5') de détection capacitive du mouvement d'excitation selon l'axe x d'excitation respectivement associées aux deux ensembles inertiels mobiles (EIM1, EIM2), deux troisièmes électrodes commandées (6, 6') de détection capacitive du mouvement d'excitation selon l'axe y de détection respectivement associées aux deux ensembles inertiels mobiles (EIM1, EIM2), et deux quatrièmes électrodes commandées (9, 9') d'équilibrage du résonateur de détection et d'ajustement électrostatique de la fréquence du résonateur de détection selon l'axe y de détection respectivement associées aux deux ensembles inertiels mobiles (EIM1, EIM2) dudit diapason, caractérisé en qu'il comprend :

des moyens de commande (UCE) adaptés pour appliquer deux tensions électriques $V_1$ et $V_2$ continues respectives auxdites deux quatrièmes électrodes (9, 9') vérifiant simultanément les relations :

$$V_1^2 + V_1^2 = \frac{2\left(f_{y\_initiale} - f_{y\_finale}\right)}{\mu_f} \quad \text{et} \quad V_1^2 - V_2^2 = \frac{c_{y\_initiale}}{a\lambda_f}$$

dans lesquelles :

$f_{y\_initiale}$ représente la fréquence de résonance initiale, lorsque les tensions électriques $V_1$ et $V_2$ sont nulles, du mode de détection selon l'axe y de détection, en Hz,

$f_{y\_finale}$ représente la fréquence de résonance finale du mode de détection selon l'axe y de détection à ajuster, en Hz, et

$\mu_f$ représente un coefficient de sensibilité de la fréquence du mode détection au carré de la tension électrique appliquée sur lesdites quatrièmes électrodes (9, 9'), en Hz.V$^{-2}$,

$c_{y\_initiale}$ représente la sensibilité initiale du gyromètre, lorsque les deux tensions électriques $V_1$ et $V_2$ sont nulles, aux accélérations linéaires selon l'axe y de détection en deg.h$^{-1}$.G$^{-1}$, a représente un coefficient caractérisant l'influence d'un écart de raideur entre les deux branches du diapason sur la sensibilité du gyromètre aux accélérations linéaires selon l'axe y, en deg.h$^{-1}$.G$^{-1}$.N$^{-1}$.m, pouvant éventuellement varier en fonction de la fréquence de l'accélération,

$\lambda_f$ représente un coefficient de raideur électrostatique dépendant desdites quatrièmes électrodes (9, 9') en N.m$^{-1}$. V$^{-2}$,

$V_1$ et $V_2$ sont exprimées en Volts, et

G vaut 9,81 m.s$^{-2}$.

2. Gyromètre selon la revendication 1, dans lequel, lesdits moyens de commande commandant lesdites quatrièmes électrodes (9, 9') en boucle ouverte, ladite fréquence de résonance finale $f_{y\_finale}$ est égale à la fréquence $f_x$ du mode d'excitation selon l'axe x d'excitation.

3. Gyromètre selon la revendication 1, dans lequel, lesdits moyens de commande commandant lesdites quatrièmes électrodes (9, 9') en boucle fermée, ladite fréquence de résonance finale $f_{y\_finale}$ est égale à la fréquence $f_x$ du mode d'excitation selon l'axe x d'excitation.

4. Gyromètre selon la revendication 1, dans lequel, lesdits moyens de commande commandant lesdites quatrièmes électrodes (9, 9') en boucle ouverte, ladite fréquence de résonance finale $f_{y\_finale}$ est égale à la somme de la fréquence $f_x$ du mode d'excitation selon l'axe x d'excitation et d'un écart de fréquence $\Delta f_y$ prédéterminé.

**Patentansprüche**

1. Gyrometer mit einer vibrierenden Struktur mit wenigstens einer Stimmgabel, die durch Mikrobearbeitung in einem dünnen Wafer erzeugt wird, wobei die Stimmgabel ein Paar mobile Trägheitsbaugruppen (EIM1, EIM2) umfasst, die durch eine Kopplungsbaugruppe (1) miteinander verbunden sind, wobei eine mobile Trägheitsbaugruppe (EIM1, EIM2) mit ersten Versteifungselementen (2, 2'), die in der Ebene des Wafers entlang einer Erregungsachse x im Wesentlichen verformt werden können, und mit zweiten Versteifungselementen (3, 3') versehen ist, die in der Ebene des Wafers entlang einer Erkennungsachse y im Wesentlichen lotrecht zur Achse x im Wesentlichen verformt werden können, wobei das Gyrometer für die Stimmgabel ferner Folgendes umfasst: zwei erste gesteuerte Elektroden (4, 4') zum elektrostatischen Erregen entlang der Erregungsachse x, die jeweils mit den zwei mobilen Trägheitsbaugruppen (EIM1, EIM2) assoziiert sind, zwei zweite gesteuerte Elektroden (5, 5') zum kapazitiven Erkennen der Erregungsbewegung entlang der Erregungsachse x, die jeweils mit zwei mobilen Trägheitsbaugruppen (EIM1, EIM2) assoziiert sind, und zwei dritte gesteuerte Elektroden (6, 6') zum kapazitiven Erkennen der Erregungsbewegung entlang der Erkennungsachse y, die jeweils mit zwei mobilen Trägheitsbaugruppen (EIM1, EIM2) assoziiert sind, und zwei vierte gesteuerte Elektroden (9, 9') zum Ausgleichen des Ereknnungsresonators und zum elektrostatischen Justieren der Frequenz des Erkennungsresonators entlang der Erkennungsachse y, die jeweils mit zwei mobilen Trägheitsbaugruppen (EIM1, EIM2) der Stimmgabel assoziiert sind, **dadurch gekennzeichnet, dass** es Folgendes umfasst:

Steuermittel (UCE) zum Anlegen von zwei jeweiligen Gleichspannungen $V_1$ und $V_2$ an die zwei vierten Elektroden (9, 9'), um gleichzeitig die folgenden Beziehungen zu verifizieren:

$$V_1^2 + V_1^2 = \frac{2\left(f_{y\_initiale}^{'} - f_{y\_finale}^{'}\right)}{\mu_f}$$

und

$$V_1^2 - V_2^2 = \frac{c_{y\_initiale}}{a\lambda_f}$$

wobei:

$f_{y\_initiale}$ die Anfangsresonanzfrequenz, wenn die Spannungen $V_1$ und $V_2$ null sind, des Erkennungsmodus entlang der Erkennungsachse y in Hz repräsentiert;

$f_{y\_finale}$ die Endresonanzfrequenz des Erkennungsmodus entlang der zu justierenden Erkennungsachse y in Hz repräsentiert; und

$\mu_f$ einen Koeffizienten der Frequenz des Erkennungsmodus in Bezug auf die Empfindlichkeit für das Quadrat der an die vierte Elektroden (9, 9') angelegten Spannung in $Hz.V^{-2}$ repräsentiert;

$c_{y\_initiale}$ die Anfangsempfindlichkeit des Gyrometers, wenn die beiden Spannungen $V_1$ und $V_2$ null sind, zu den linearen Beschleunigungen entlang der Erkennungsachse y in $Grad.h^{-1}.G^{-1}$ repräsentiert;

a einen Koeffizienten repräsentiert, der den Einfluss einer Steifigkeitsdifferenz zwischen den beiden Schenkeln der Stimmgabel auf die Empfindlichkeit des Gyrometers für lineare Beschleunigungen entlang der Achse y in $Grad.h^{-1}.G^{-1}.N^{-1}.m$ charakterisiert, die eventuell in Abhängigkeit von der Frequenz der Beschleunigung variieren kann;

$\lambda_f$ einen elektrostatischen Steifigkeitskoeffizienten je nach den vierten Elektroden (9, 9') in $N.m^{-1}.V^{-2}$ repräsentiert;

$V_1$ und $V_2$ in Volt ausgedrückt werden; und

G gleich $9,81\ m.s^{-2}$ ist.

2. Gyrometer nach Anspruch 1, wobei die Endresonanzfrequenz $f_{y\_finale}$, wenn das Steuermittel die vierten Elektroden (9, 9') in einem offenen Kreis steuert, gleich der Frequenz $f_x$ des Erregungsmodus entlang der Erregungsachse x ist.

3. Gyrometer nach Anspruch 1, wobei die Endresonanzfrequenz $f_{y\_finale}$, wenn das Steuermittel die vierten Elektroden (9, 9') in einem geschlossenen Kreis steuert, gleich der Frequenz $f_x$ des Erregungsmodus entlang der Erregungsachse x ist.

4. Gyrometer nach Anspruch 1, wobei die Endresonanzfrequenz $f_{y\_finale}$, wenn das Steuermittel die vierten Elektroden (9, 9') in einem offenen Kreis steuert, gleich der Summe der Frequenz $f_x$ des Erregungsmodus entlang der Erregungsachse x und einer vorbestimmten Frequenzverschiebung $\Delta f_y$ ist.

**Claims**

1. A gyrometer with a vibrating structure including at least one tuning fork, produced by micro-machining in a thin wafer, said tuning fork comprising a pair of mobile inertial assemblies (EIM1, EIM2) linked by a coupling assembly (1), with a mobile inertial assembly (EIM1, EIM2) being provided with first stiffness elements (2, 2') that can be substantially deformed in the plane of the wafer along an axis x of excitation and with second stiffness elements (3, 3') that can be substantially deformed in the plane of the wafer along an axis y of detection substantially perpendicular to the axis x, said gyrometer further comprising, for the tuning fork, two first controlled electrodes (4, 4') for electrostatic excitation along the axis x of excitation, which are respectively associated with two mobile inertial assemblies (EIM1, EIM2), two second controlled electrodes (5, 5') for capacitive detection of the excitation movement along the axis x of excitation, which are respectively associated with two mobile inertial assemblies (EIM1, EIM2), and two third controlled electrodes (6, 6') for capacitive detection of the excitation movement along the axis y of detection, which are respectively associated with two mobile inertial assemblies (EIM1, EIM2), and two fourth controlled electrodes (9, 9') for balancing the detection resonator and electrostatically adjusting the frequency of the detection resonator along the axis y of detection, which are respectively associated with two mobile inertial assemblies (EIM1, EIM2) of said tuning fork, **characterised in that** it comprises:

control means (UCE) designed to apply two respective direct voltages $V_1$ and $V_2$ to said two fourth electrodes (9, 9') simultaneously verifying the following relations:

$$V_1^2 + V_1^2 = \frac{2\left(f_{y\_initiale}^{\cdot} - f_{y\_finale}^{\prime}\right)}{\mu_f}$$

and

$$V_1^2 - V_2^2 = \frac{c_{y\_initiale}}{a\lambda_f}$$

in which:

$f_{y\_initiaie}$ represents the initial resonant frequency, when the electrical voltages $V_1$ and $V_2$ are zero, of the detection mode along the axis y of detection, in Hz;

$f_{y\_finale}$ represents the final resonant frequency of the detection mode along the axis y of detection to be adjusted, in Hz; and

$\mu_f$ represents a coefficient of sensitivity of the frequency of the detection mode to the square of the electrical voltage applied to said fourth electrodes (9, 9'), in $Hz.V^{-2}$;

$c_{y\_initiale}$ represents the initial sensitivity of the gyrometer, when the two electrical voltages $V_1$ and $V_2$ are zero, to the linear accelerations along the axis y of detection in $deg.h^{-1}.G^{-1}$;

a represents a coefficient characterising the influence of a difference in stiffness between the two branches of the tuning fork on the sensitivity of the gyrometer to linear accelerations along the axis y, in $deg.h^{-1}.G^{-1}.N^{-1}.m$, which may vary as a function of the frequency of the acceleration;

$\lambda_f$ represents an electrostatic stiffness coefficient depending on said fourth electrodes (9, 9') in $N.m^{-1}.V^{-2}$;

$V_1$ and $V_2$ are expressed in volts; and

G equals $9.81\ m.s^{-2}$.

2. The gyrometer according to claim 1, wherein, with said control means controlling said fourth electrodes (9, 9') in an open loop, said final resonant frequency $f_{y\_finale}$ is equal to the frequency $f_x$ of the excitation mode along the axis x of excitation.

3. The gyrometer according to claim 1, wherein, with said control means controlling said fourth electrodes (9, 9') in a closed loop, said final resonant frequency $f_{y\_finale}$ is equal to the frequency $f_x$ of the excitation mode along the axis x of excitation.

4. The gyrometer according to claim 1, wherein, with said control means controlling said fourth electrodes (9, 9') in an open loop, said final resonant frequency $f_{y\_finale}$ is equal to the sum of the frequency $f_x$ of the excitation mode along the axis x of excitation and a predetermined frequency shift $\Delta f_y$.

FIG.1

FIG.2

FIG.3

FIG.4

**EP 2 504 661 B1**

## RÉFÉRENCES CITÉES DANS LA DESCRIPTION

**Documents brevets cités dans la description**

- WO 2004042324 A, Thalès
- EP 1579176 B1, Thalès
- WO 2007068649 A, Thalès